# EUROPEAN PATENT APPLICATION

(11) **EP 3 296 352 A1**
(43) Date of publication of application: **21.03.2018**
(21) Application number: 16306205.2
(22) Date of filing: 20.09.2016
(51) Int. Cl.: C08K 5/00, C08K 5/08, C08K 5/3475, G02B 1/04, G02C 7/02

(54) **POLYCARBONATE RESIN WITH IMPROVED BLUE-CUT AND NEUTRAL COLOR**

(71) Applicant: Essilor International, 94220 Charenton-le-Pont (FR)
(72) Inventor: FRENCH, Elliot, DALLAS, TX Texas 75234 (US); SHAN, Haifeng, DALLAS, TX Texas 75234 (US); CHIU, Hao Wen, DALLAS, TX Texas 75234 (US); JALLOULI, Aref, DALLAS, TX Texas 75234 (US)
(74) Representative: Jacobacci Coralis Harle

(57) **Abstract**

Embodiments of the disclosure relate to color additives and color formulations for offsetting or reducing yellowness index of blue-cut lenses. The color additives and color formulations are selected to provide color neutrality and color homogeneity for blue-cut lenses. Resins formulations comprising at least two color-balancing color additives are also disclosed.

## Description

### FIELD OF THE INVENTION

The invention relates to the field of ophthalmic lenses with blue-light blocking capabilities.

### BACKGROUND

Blue light is a higher-energy component than the rest of the visible light spectrum. Studies suggest that, over time, exposure to the blue end of the light spectrum could cause serious long-term damage to your eyes. In order to prevent blue light-related health issues, ophthalmic lens manufacturers have developed methods to reduce transmittance of blue light through ophthalmic lenses.

One approach for limiting the passage of blue light through the lens and into the eye is to add blue-cut and UV-absorbing filters to ophthalmic lenses. The addition of blue light and UV absorbing dyes to ophthalmic lenses increases the yellowness index (YI) of the material. In order to neutralize the yellow color for clear product applications, coloring agents (dyes) must be added to the lens.

Spectacle lenses of various prescription powers create a lens with a variation in thickness from center to edge. This variation in thickness makes it difficult to select colorants that provide uniform, neutral color from lens center to edge (this is referred to as color homogeneity).

Many colorants or dyes have complex molecular structures that are susceptible to heat degradation. During lens-forming processes, such as injection molding, a polymeric resin material is subjected to elevated temperature and pressure conditions. The elevated temperatures may cause degradation of some colorants, which in turn adversely affects lens color and homogeneity. There is a need for lens resin color additives that offset yellow tinting, provide color homogeneity, and withstand lens-processing conditions.

### SUMMARY

It is an object of the disclosure to provide color-balanced lenses that provide protection against blue and UV light. The color additives and color formulations disclosed herein are selected to offset or reduce yellowness index of blue-cut lenses. In some embodiments, a color formulation is selected to provide color neutrality and color homogeneity for blue-cut lenses. The color formulation may provide color neutrality and color homogeneity for spectacle lenses of different prescription powers. In some aspects, a color formulation is optimized provide color balance and color neutrality for prescription lenses of varying prescription powers.

In some embodiments, the color formulations disclosed herein comprise a combination of two colorants. In some aspects, the two colorants are provided in a ratio that bestows neutral color and/or color homogeneity to an optical article. In additional aspects, the two colorants are selected to provide lenses with a range of homogeneous colors that meet customer preferences.

In some aspects, the color formulations are compatible with polycarbonate resins, lens-forming processes, and downstream coating processes. In some embodiments, the amount of each color additive concentration is selected to meet the color and transmission shift commonly encountered with anti-reflective coatings.

Lens forming processes involve resins and color additives to be subjected to elevated temperatures. In some aspects, the color additives' thermal stabilities are taken into consideration when selecting color additives for a color formulation. In additional aspects, the color additives' photostabilities are take into consideration when selecting color additives for a color formulation.

Optical articles comprising the presently disclosed color formulations are intended to provide health benefits to consumers in the form of blue light protection. In some embodiments, resin formulations comprising the presently disclosed color formulations may be implemented on a mass production scale to produce thermoplastic semi-finished and finished lenses.

It is an object of the disclosure to provide color formulations for ophthalmic article resins. The color formulations comprise at least two colorants and may be compounded with a resin by numerous methods known to those of skill in the art. In some embodiments, a UV and blue light-blocking resin mixture for producing color-homogeneous UV and blue light-blocking lenses comprises a polycarbonate resin, a UV absorber, and at least one colorant additive. In some embodiments, the resin mixture further comprises a second colorant additive. In some embodiments, the polycarbonate resin comprises at least one prior to adding the resin to the resin mixture. In additional embodiments, at least one additional or supplementary UV absorber is added to the resin mixture. In some aspects, the polycarbonate resin comprises a polycarbonate polymer with a weight average molecular weight ranging from about 20,000 to about 40,000 g/mol. In some embodiments, a UV absorber has a maximum cut in the 315-400nm light wavelength range and partially blocks blue light in the 400-500 nm range. Therefore, in some aspects, UV and blue light-blocking resin mixture for producing color-homogeneous UV and blue light-blocking lenses comprises a polycarbonate resin, which may already include a UV absorber, at least one colorant additive, and a UV absorber. In some embodiments, the resin is Teijin Panlige L-1250VX, Bayer Makrolon LQ3187, or Sabic Lexan OQ4120, OQ4320, OQ4320R, OQ4620, or OQ4620R, or other resin known to those of skill in the art.

UV absorbers are frequently incorporated in optical articles in order to reduce or prevent UV light from reaching the retina (in particular in ophthalmic lens materials). In addition, UV absorbers protect the substrate material from UV light, thus preventing it from weathering and becoming brittle and/or yellow. In some aspects, the UV absorber preferably has the ability to at least partially block light having a wavelength shorter than 400 nm, preferably UV wavelengths below 385 or 390 nm, but also has an absorption spectrum extending to the visible blue light range (400 - 500 nm). Most preferred ultraviolet absorbers have a maximum absorption peak in a range from 350 nm to 370 nm and/or do not absorb light in the 465-495 nm range, preferably the 450-550 nm range.

In some aspects, the UV absorber is a benzotriazole absorber. Suitable UV absorbers include without limitation 2-(2-hydroxyphenyl)-benzotriazoles such as 2-(2-hydroxy-3-t-butyl-5-methylphenyl) chlorobenzotriazole, 2-(2'-hydroxy-5'-t-octylphenyl) benzotriazole, 2-(3'-methallyl-2'-hydroxy-5'-methyl phenyl) benzotriazole or other allyl hydroxymethylphenyl benzotriazoles, 2-(3,5-di-t-amyl-2-hydroxyphenyl) benzotriazole, and the 2-hydroxy-5-acryloxyphenyl-2H-benzotriazoles disclosed in U.S. Pat. No. 4,528,311 and also Tinuvin®CarboProtect® from BASF. Preferred absorbers are of the benzotriazole family. Commercially available products include Tinuvin 326 from BASF, Seeseorb 703 from Cipro, Viosorb 550 from Kyodo Chemicals, and Kemisorb 73 from Chemipro, Tinuvin®CarboProtect®. In particular aspects, the UV absorber is 2-(5-chloro-2H-benzotriazole-2-yl)-6-(1,1-dimethylethyl)-4-methyl phenol, also known as Tinuvin 326.

In some aspects, a resin mixture or color formulation comprises at least one colorant additive. In specific aspects, a resin mixture or color formulation comprises at least two colorant additives. Suitable colorant additives can be selected from azo dyes, polymethyne dyes, arylmethyne dyes, polyene dyes, anthracinedione dyes, pyrazolone dyes, anthraquinone dyes, auinophtalone dyes, and carbonyl dyes. In some embodiments, at least one of the first and second colorant additives is an anthraquinone dye. In particular embodiments, the first colorant additive and the second colorant additives are anthraquinone dyes. In some aspects, the at least one colorant additive is 3H-naphtho[1,2,3-de]quinoline-2,7-dione,3-methyl-6-[(4-methylphenyl)amino], also known as Solvent Red 52. In some aspects, the second colorant additive is 9,10-anthracenedione, 1,4-bis[(2,4,6-trimethylphenyl) amino], also known as Solvent Blue 104. In some embodiments, one of the first or second colorant additives is one of solvent violet 36, solvent violet 13, solvent violet 11, solvent violet 37, solvent violet 50, solvent blue 138, solvent blue 45, or solvent red 169.

In some embodiments, the resin mixture comprises a UV absorber in an amount ranging from 0.1 to 2.0 weight percent of the resin mixture. In some embodiments, the first colorant additive is present in an amount ranging from 0.1 to 3.0 ppm. In some aspects, the second colorant additive is present in an amount ranging from from 0.1 to 3.0 ppm. In some aspects, the ratio of first colorant additive to second colorant additive ranges from 0.03 to 30. In additional aspects, the ratio of first colorant additive to second colorant additive is selected to provide optimal color and homogeneity.

In some aspects, the resin mixture further comprises at least one selective filter. A selective filter selectively inhibits/blocks transmission of light in a selected wavelength range chosen within the 400-500 nm range, preferably in the 400-460 nm range. In some aspects, a selective filter has little or no effect on transmission of wavelengths outside the selected wavelength range, unless specifically configured to do so. The bandwdith of the selected range can preferably range from 10 to 70 nm, preferably from 10 to 60 nm more preferably 20 to 50 nm. In some embodiments the selective filter preferably blocks or cuts at least 5 % of the light in the selected wavelength range, preferably at least 8 %, more preferably at least 12 %. The phrase "blocking X %" of incident light in a specified wavelength range does not necessarily mean that some wavelengths within the range are totally blocked, although this is possible. Rather, "blocking X %" of incident light in a specified wavelength range means that an average of X % of said light within the range is not transmitted. As used herein, the light blocked in this way is light arriving on the main face of the optical article onto which the layer comprising the at least one optical filtering means is deposited, generally the front main face.

In some aspects, the selective filter is a notch filter. Preferably, the selective filter is an absorbing dye at least partially absorbing light in the 400-500 nm wavelength range, preferably in the 400-460 nm wavelength range. The chemical nature of the absorbing dye that may act as filter for at least partially inhibiting light having the selected wavelength range is not particularly limited as far as the absorbing dye acts as a selective filter. Blue light blocking dyes, typically yellow dyes, are preferably selected to have little or no absorbance in other parts of the visible spectrum to minimize the appearance of other colors.

Porphyrins are well-known macrocycle compounds composed of four modified pyrrole subunits interconnected at their carbon atoms via methine bridges. The parent porphyrin is porphine and substituted porphines are called porphyrins. Porphyrins are the conjugate acids of ligands that bind metals to form (coordination) complexes.

Certain porphyrins or porphyrin complexes or derivatives are interesting in that they provide selective absorption filters having a bandwidth in some cases of for example 20 nm in the selected blue range of wavelengths. The selectivity property is in part provided by the symmetry of the molecules. Such selectivity helps to limit the distortion of the visual perception of color, to limit the detrimental effects of light filtering to scotopic vision and to limit the impact on circadian rhythm.

For example, the one or more porphyrins or porphyrin complexes or derivatives are selected from the group consisting of Chlorophyll a; Chlorophyll b; 5,10, 15,20-tetrakis(4-sulfonatophenyl) porphyrin sodium salt complex; 5,10,15,20-tetrakis(N-alkyl-4-pyridyl) porphyrin complex; 5,10,15,20-tetrakis(N-alkyl-3-pyridyl) porphyrin complex, and 5,10,15,20-tetrakis(N-alkyl-2-pyridyl) porphyrin complex, the alkyl being preferably an alkyl chain, linear or branched, comprising 1 to 4 carbon atoms per chain. For example the alkyl may be selected from the group consisting of methyl, ethyl, butyl and propyl.

The complex usually is a metal complex, the metal being selected from the group consisting of Cu cation, Cr(III), Ag(II), In(III), Mn(III), Sn(IV), Fe (III), Co (II), Mg(II) and Zn(II). Cr(III), Ag(II), In(III), Mn(III), Sn(IV), Fe (III), Co (II) and Zn(II) demonstrate absorption in water in the range of 425nm to 448nm with sharp absorption peaks. Moreover, the complexes they provide are stable and not acid sensitive. Cr(III), Ag(II), In(III), Sn(IV), Fe (III), in particular, do not exhibit fluorescence at room temperature.

In some embodiments the one or more porphyrins or porphyrin complexes or derivatives are selected from the group consisting of magnesium meso-tetra(4-sulfonatophenyl) porphine tetrasodium salt, magnesium octaethylporphyrin, magnesium tetramesitylporphyrin, octaethylporphyrin, tetrakis (2,6-dichlorophenyl) porphyrin, tetrakis (o-aminophenyl) porphyrin, tetramesitylporphyrin, tetraphenylporphyrin, zinc octaethylporphyrin, zinc tetramesitylporphyrin, zinc tetraphenylporphyrin, and diprotonated-tetraphenylporphyrin.

In some aspects, a UV and blue light-blocking resin mixture is used to produce a lens, a film, a laminate, or any other optical article known to those in the art. In some embodiments, a UV and blue light-blocking resin mixture is used to produce a wafer for integrating on the surface of an optical article. In some embodiments, a UV absorber and at least one colorant additive, preferably two colorant additives, are added to a reactive monomer and cast into an optical article.

In some embodiments, there is a method for using dye spectrophotometer transmission curve data for producing a color balancing model for said dye. In further embodiments, the model can be used to predict perceived color for a variety of dye-related variables, including but not limited to dye concentration, lens thickness, and ratios of multiple dyes. In some embodiments, a color balancing model may be used to identify optimal dye concentrations to achieve desired levels of blue-cut performance, color neutrality, and/or color homogeneity.

Any embodiment of any of the disclosed compositions and/or methods can consist of or consist essentially of-rather than comprise/include/contain/have-any of the described elements and/or features and/or steps. Thus, in any of the claims, the term "consisting of" or "consisting essentially of" can be substituted for any of the open-ended linking verbs recited above, in order to change the scope of a given claim from what it would otherwise be using the open-ended linking verb.

The term "substantially" and its variations are defined as being largely but not necessarily wholly what is specified as understood by one of ordinary skill in the art, and in one non-limiting embodiment substantially refers to ranges within 10%, within 5%, within 1%, or within 0.5%. The terms "dyes" , "colorants", and "colorant additives" are used interchangably herein.

"Analogue" and "analog," when referring to a compound, refers to a modified compound wherein one or more atoms have been substituted by other atoms, or wherein one or more atoms have been deleted from the compound, or wherein one or more atoms have been added to the compound, or any combination of such modifications. Such addition, deletion or substitution of atoms can take place at any point, or multiple points, along the primary structure comprising the compound.

"Derivative," in relation to a parent compound, refers to a chemically modified parent compound or an analogue thereof, wherein at least one substituent is not present in the parent compound or an analogue thereof. One such non-limiting example is a parent compound which has been covalently modified. Typical modifications are amides, carbohydrates, alkyl groups, acyl groups, esters, pegylations and the like.

The term "about" or "approximately" or "substantially unchanged" are defined as being close to as understood by one of ordinary skill in the art, and in one non-limiting embodiment the terms are defined to be within 10%, preferably within 5%, more preferably within 1%, and most preferably within 0.5%.

The use of the word "a" or "an" when used in conjunction with the term "comprising" in the claims and/or the specification may mean "one," but it is also consistent with the meaning of "one or more," "at least one," and "one or more than one."

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The compositions and methods for their use can "comprise," "consist essentially of," or "consist of" any of the ingredients or steps disclosed throughout the specification. With respect to the transitional phase "consisting essentially of," in one non-limiting aspect, a basic and novel characteristic of the compositions and methods disclosed in this specification includes the compositions' abilities to reduce or prevent passage of blue light through a lens.

Other objects, features and advantages of the present invention will become apparent from the following detailed description. It should be understood, however, that the detailed description and the examples, while indicating specific embodiments of the invention, are given by way of illustration only. Additionally, it is contemplated that changes and modifications within the spirit and scope of the invention will become apparent to those skilled in the art from this detailed description.

### BRIEF DESCRIPTION OF THE FIGURES

**FIGS. 1A-1B** are spectrohotometric transmission curves indicating thermal stability of different dyes. **FIG. 1A** includes two solvent blue 104 stability curves, each run at different temperatures.

**FIG. 1B** includes two solvent red 52 stability curves, each run at different temperatures. The two curves in each graph overlap almost completely, indicitating that the dyes are stable at low and high temperatures.

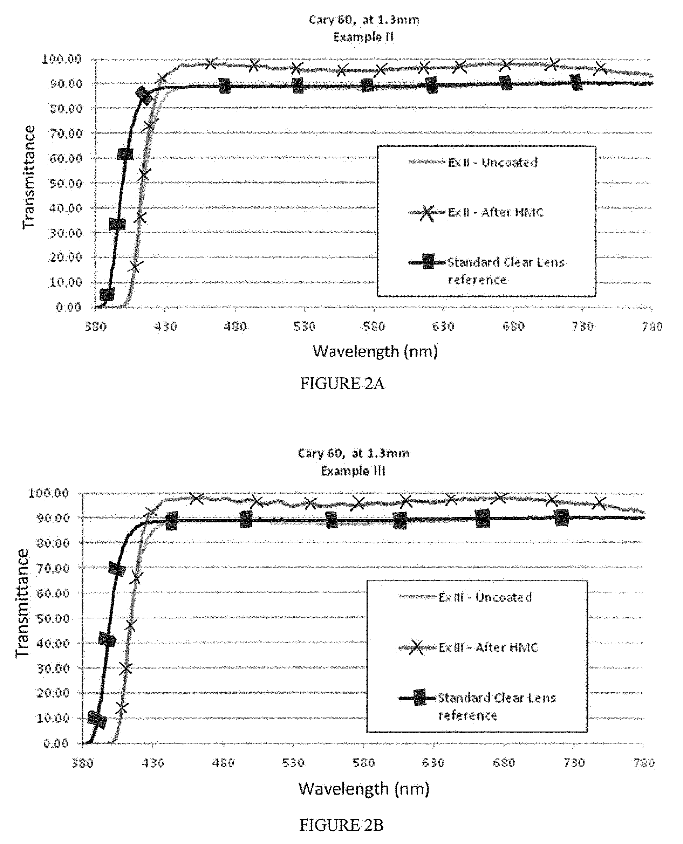

**FIGS. 2A-2B** each include three sets of spectrophotometric transmission curves. **FIG. 2A** corresponds to Example II. **FIG. 2B** corresponds to Example III. The transmission curves include a standard clear lens reference curve, a transmission through a 1.3 mm uncoated lens, and a transmission curve through a 1.3 mm HMC coated lens.

### DETAILED DESCRIPTION

Various features and advantageous details are explained more fully with reference to the non-limiting embodiments that are illustrated in the accompanying drawings and detailed in the following description. It should be understood, however, that the detailed description and the specific examples, while indicating embodiments, are given by way of illustration only, and not by way of limitation. Various substitutions, modifications, additions, and/or rearrangements will be apparent to those of ordinary skill in the art from this disclosure.

In the following description, numerous specific details are provided to provide a thorough understanding of the disclosed embodiments. One of ordinary skill in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

### EXAMPLES

An ophthalmic lens formulation of thermoplastic resin for clear application with enhanced blue light absorbance must contain a combination of thermally and photo stable dyes with a specific absorbance, as well as, other additives such as mold release and heat stabilizers at sufficient levels to meet the demands for injection molding of ophthalmic quality parts.

The dyes used in the formulation include:

### UV Absorbers:

Tinuvin 329 = 2-(2*H*-benzotriazol-2-yl)-4-(1,1,3,3-tetramethylbutyl)phenol (CAS# 3147-75-9)
Tinuvin 326 = 2-(5-chloro-2*H*-benzotriazol- 2-yl)-6-(1,1-dimethylethyl)-4-methylphenol (CAS# 3896-11-5)

### Color Neutralizing Agents:

Solvent Blue 104 = 1,4-bis[(2,4,6-trimethylphenyl) amino] 9,10-anthracenedione (CAS# 116-75-6)
Solvent Red 52 = 3H-Naphtho[1,2,3-de]quinoline-2,7-dione,3-methyl-6-[(4-methylphenyl) amino] (CAS# 81-39-0)

The general resin formulation is:
1. Base polycarbonate resin (100 parts) - includes a polycarbonate polymer, 0.05-0.5 wt% Tinuvin 329, 0.01-0.3 wt% Tinuvin 326, a heat stabilizer, and a mold release agent
2. Tinuvin 326 (0.1 to 2.0 parts)
3. Solvent Blue 104 (0.1×10⁻⁴ to 3.0×10⁴ parts)
4. Solvent Red 52 (0.1×10⁻⁴ to 3.0×10⁻⁴ parts)

All general resin formulation were combined *via* a tumbling technique to produce a final pre-mix. The final pre-mix may be produced in a single step, or may be composed of a concentrated pre-mix for each component. In some embodiments, the final pre-mix can be melt extruded with a compounder such as a single- or twin-screw prior to injection molding. In other embodiments, the final pre-mix can be added directly to the injection molding machine. Compounding prior to injection molding has the advantage of ensuring a well-blended formula and minimal impact on existing injection molding processes. Injection molding of the pre-mix directly has the advantage of eliminating the thermal history of compounding which could shift the color.

Optical standards (lenses of known thickness including a single dye at a known concentration) can be produced and measured with a spectrophotometer such as a Cary 50 or Cary 60 to produce transmission curve data for each dye. This standard data may then be used to build a "color balancing model" based on Beer Lambert's Law. The predicted color can then be computed at various dye concentrations, ratios and lens thicknesses. The "color balancing model" may be used to predetermine optimal dye concentrations to achieve a desired level of blue-cut, color neutrality, and color homogeneity.

Several color balancing formulations were produced in a power of -6 to yield an uncoated lens with a 1.3mm center and 10mm edge. The samples were applied with hard multi-coating (HMC) then evaluated for color neutrality, color intensity, and color homogeneity. Two formulations were evaluated to have acceptable neutrality, intensity, and homogeneity for clear ophthalmic applications.

The formulations given below were evaluated. For each formulation, -6.0 diopter lenses were produced by the same process steps described below.

### Process Steps:

1. Pre-mix concentrate was produced for each dye via a tumbling process by adding the dye to PC pellets.
2. Lens standard produced for each dye by mixing a known quantity of PC pellets with Pre-mix concentrate.
3. Transmission spectrum data for each dye's lens standard loaded into Color Balancing Model.
4. Final pre-mix produced by tumbling together the pre-mix concentrate for each dye with PC pellets. Amount of each dye pre-mix concentrate and PC pellets to add is calculated based on Color Balancing Model output given a target color.
5. Final pre-mix dried at 105 °C for 4 hours and loaded into injection molding machine to produce - 6.0 Diopter lens samples.
6. Lens samples coated with HMC followed by visual evaluation.

**Table 1: Formulations**

| | **Component Concentrations** | | |
|---|---|---|---|
| | **UV Absorber** | **First Colorant Additive** | **Second Colorant Additive** |
| **Example I** | 0.32-0.40% | 1.15-1.42 ppm | 0.47-0.58 ppm |
| **Example II** | 0.32-0.40% | 1.00-1.24 ppm | 0.58-0.71 ppm |
| **Example III** | 0.31-0.39% | 0.88-1.09 ppm | 0.62-0.77 ppm |
| **Example IV** | 0.28-0.35% | 1.22-1.50 ppm | 0.45-0.56 ppm |
| **Example V** | 0.31-0.39% | 1.32-1.63 ppm | 0.76-0.93 ppm |
| **Example VI** | 0.31-0.39% | 1.21-1.49 ppm | 0.86-1.06 ppm |
| **Example VII** | 0.30-0.37% | 1.50-1.85 ppm | 0.66-0.82 ppm |
| **Example VIII** | 0.30-0.37% | 1.43-1.76 ppm | 0.70-0.86 ppm |
| **Example IX** | 0.30-0.37% | 1.36-1.68 ppm | 0.81-1.00 ppm |

### Blue-Cut and Color Results

**Table 2: -6 FSV Data (1.3 mm, After HMC)**

| | **Examples** | | | | | | | | |
|---|---|---|---|---|---|---|---|---|---|
| | **I** | **II** | **III** | **IV** | **V** | **VI** | **VII** | **VIII** | **IX** |
| **BVC B'** | 19.5% | 19.4% | 20.5% | 19.1% | 20.1% | 19.4% | 20.0% | 19.6% | 19.7% |
| **UVcut** | 402 | 402 | 402 | 402 | 402 | 402 | 402 | 402 | 402 |
| **Tv% (D65)** | 95.4 | 95.6 | 95.6 | 95.5 | 95.2 | 95.4 | 95.3 | 95.3 | 95.2 |
| **c** | 2.3 | 2.3 | 2.4 | 2.2 | 2.2 | 2.2 | 2.2 | 2.2 | 2.2 |
| **h** | 122.4 | 121.6 | 119.9 | 119.9 | 123.1 | 121.3 | 121.1 | 121.7 | 118.2 |
| **Yl** | 1.6 | 1.6 | 1.8 | 1.6 | 1.4 | 1.5 | 1.5 | 1.45 | 1.7 |

**Table 3: Center vs Edge (Uncoated Lens)**

| | | **Examples** | | | | | | | | |
|---|---|---|---|---|---|---|---|---|---|---|
| | | **I** | **II** | **III** | **IV** | **V** | **VI** | **VII** | **VIII** | **IX** |
| **1.3mm CT Actual Data** | **Tv% (D65)** | 88.1 | 88.1 | 88.0 | 87.9 | 87.8 | 87.6 | 87.6 | 87.6 | 87.6 |
| | **L** | 95.2 | 95.2 | 95.1 | 95.1 | 95.0 | 95.0 | 95.0 | 95.0 | 95.0 |
| | **a*** | -1.6 | -1.6 | -1.5 | -1.6 | -1.6 | -1.5 | -1.6 | -1.6 | -1.5 |
| | **b*** | 2.6 | 2.8 | 2.7 | 2.5 | 2.5 | 2.6 | 2.4 | 2.4 | 2.4 |
| | **c** | 3.1 | 3.2 | 3.1 | 3.0 | 3.0 | 3.0 | 2.9 | 2.9 | 2.8 |
| | **h** | 121.6 | 119.9 | 119.0 | 122.7 | 121.5 | 120.0 | 123.7 | 122.8 | 121.5 |
| | **YI** | 2.6 | 2.8 | 2.9 | 2.4 | 2.5 | 2.6 | 2.2 | 2.3 | 2.4 |
| **8.0mm Model Simulated Edge** | **Tv% (D65)** | 81.4 | 81.6 | 81.0 | 80.3 | 79.6 | 78.7 | 78.9 | 78.5 | 78.5 |
| | **L** | 92.4 | 92.4 | 92.2 | 91.9 | 91.6 | 91.2 | 91.3 | 91.1 | 91.1 |
| | **a*** | -3.8 | -3.4 | -3.1 | -4.0 | -3.3 | -2.9 | -3.8 | -3.6 | -3.1 |
| | **b*** | 4.0 | 4.3 | 4.3 | 3.7 | 3.1 | 3.4 | 2.7 | 2.9 | 2.8 |
| | **c** | 5.5 | 5.5 | 5.3 | 5.4 | 4.5 | 4.5 | 4.7 | 4.6 | 4.1 |
| | **h** | 133.8 | 128.2 | 125.2 | 137.5 | 136.7 | 130.2 | 144.2 | 140.7 | 137.6 |
| | **YI** | 2.2 | 3.2 | 3.6 | 1.5 | 1.0 | 2.0 | -0.13 | 0.5 | 0.7 |
| **Color difference (Edge minus Center)** | **ΔE** | 3.8 | 3.7 | 3.7 | 4.2 | 3.9 | 4.1 | 4.3 | 4.4 | 4.2 |
| | **ΔYI** | -0.4 | 0.4 | 0.7 | -0.9 | -1.5 | -0.6 | -2.3 | -1.8 | -1.7 |
| | **ΔTv** | -6.7 | -6.5 | -7.0 | -7.6 | -8.2 | -8.9 | -8.7 | -9.1 | -9.1 |
| | **Δh** | 12.2 | 8.3 | 6.2 | 14.8 | 15.2 | 10.2 | 20.5 | 17.9 | 16.1 |
| **Visual Evaluation** | **Color neutrality** | G | G | G | F | G | F | F | F | F |
| | **Color intensity** | G | G | G | F | G | F | F | F | F |
| | **Color Homogeneity** | G | VG | VG | G | G | G | G | G | G |

| | | | | | | | | | | |
|---|---|---|---|---|---|---|---|---|---|---|
| ΔE = sqrt(ΔL²+Δa²+Δb²); G = good; F = fair; VG = very good | | | | | | | | | | |

### Thermal Stability

Lens standards were produced at low and high injection molding barrel temperatures. The standards were measured on a Cary 60 spectrophotometer to identify temperature impact on dye absorbance profiles. Low barrel temperature was 510 °F and the residence time was 100 seconds. High barrel temperature was 600 °F and residence time was 240 seconds.

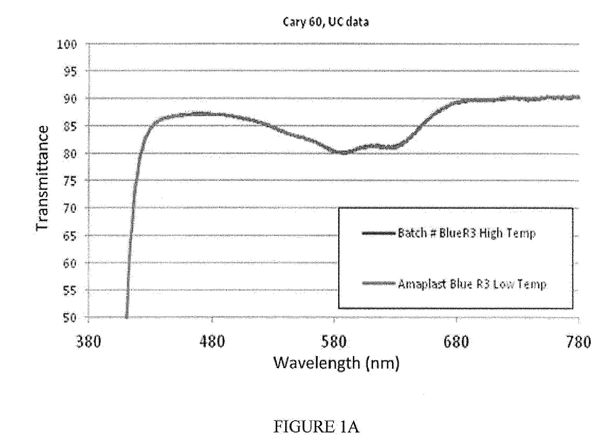

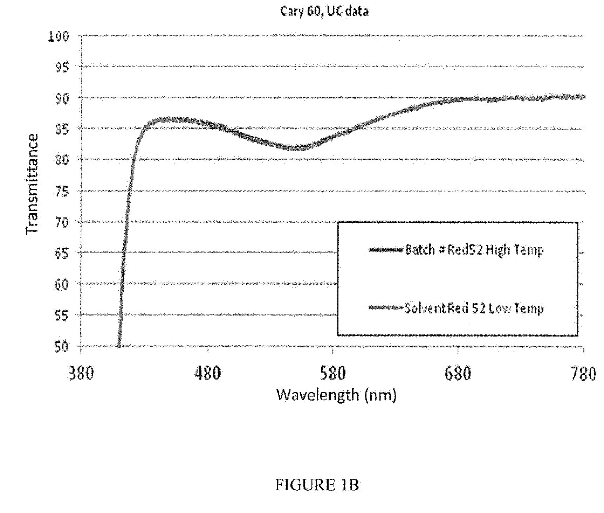

As depicted in **FIGS. 1A-1B**, the Cary 60 results show almost no measurable change in the transmission profile for either dye (two lines are almost completely overlapping). Thus, both dyes have suitable thermal stability for the polycarbonate injection molding process.

### Photostability

Lens standards were produced for solvent blue 104 and solvent red 52. The standards were measured on the Cary 60 before and after a Q-sun 40 hour test. The color results before and after are given in Table 4 below. The color results show no significant change for either dye, indicating that both dyes exhibit suitable photostability.

**Table 4: Dye Photostability**

| | **T0** | | | **T40** | | |
|---|---|---|---|---|---|---|
| | **%T** | **a*** | **b*** | **%T** | **a*** | **b*** |
| **Colorant Additive 1** | 89.2 | -0.6 | 0 | 89.1 | -0.6 | 0 |
| **Colorant Additive 2** | 89.2 | 0.3 | 0.3 | 89.2 | 0.2 | 0.3 |

The claims are not to be interpreted as including means-plus- or step-plus-function limitations, unless such a limitation is explicitly recited in a given claim using the phrase(s) "means for" or "step for," respectively.

## Claims

1. A UV and blue light-blocking resin mixture for producing color-homogeneous UV and blue light-blocking lenses comprising:
a polycarbonate resin;
at least one UV absorber having its maximum cut in the 315-400 nm light wavelength range and partially blocking blue light in the 400-500 nm range; and
at least one colorant additive.

2. The resin mixture of claim 1, further comprising a second colorant additive.

3. The resin mixture of either of claim 1 or 2, wherein the at least one UV absorber is a benzotriazole absorber.

4. The resin mixture of claim 3, wherein the benzotriazole absorber is 2-(5-chloro-2H-benzotriazol-2-yl)-6-(1,1-dimethylethyl)-4-methyl phenol.

5. The resin mixture of any of claims 1 to 4, wherein at least one of the first and second colorant additives is an anthraquinone dye.

6. The resin mixture of claim 5, wherein the at least one anthraquinone dye is 3H-naphtho[1,2,3-de]quinoline-2,7-dione,3-methyl-6-[(4-methylphenyl)amino].

7. The resin mixture of claim 5 or 6, wherein the second anthraquinone dye is 9,10-anthracenedione, 1,4-bis[(2,4,6-trimethylphenyl) amino].

8. The resin mixture of any of claims 1 to 7, wherein the UV absorber is present in an amount ranging from 0.1 to 2.0 weight percent of the resin mixture.

9. The resin mixture of any of claims 1 to 8, wherein the at least one colorant additive is present in an amount ranging from 0.1 to 3.0 ppm.

10. The resin mixture of any of claims 2 to 9, wherein the second colorant additive is present in an amount ranging from 0.1 to 3.0 ppm.

11. The resin mixture of any of claims 2 to 10, wherein the ratio of first colorant additive to second colorant additive ranges from 0.03 to 30.

12. The resin mixture of claim 11, wherein the ratio of first colorant additive to second colorant additive is selected to provide optimal color and homogeneity.

13. The resin mixture of any of claims 1 to 11, wherein a weight average molecular weight of the polycarbonate polymer ranges from about 20,000 to about 40,000 g/mol.

14. An optical article comprising the resin mixture of any of claims 1 to 13.

15. A wafer for integrating on the surface of an optical article, said wafer comprising the resin mixture of any of claims 1 to 13.
